(19) Europäisches Patentamt
European Patent Office
Office européen des brevets

(11) Veröffentlichungsnummer: **0 474 039 B1**

(12) **EUROPÄISCHE PATENTSCHRIFT**

(45) Veröffentlichungstag der Patentschrift: **09.11.94**

(51) Int. Cl.5: **C09B 29/085**, C09B 43/124

(21) Anmeldenummer: **91114030.9**

(22) Anmeldetag: **22.08.91**

(54) **o-Aminoazoverbindungen.**

(30) Priorität: **04.09.90 DE 4027970**

(43) Veröffentlichungstag der Anmeldung:
**11.03.92 Patentblatt 92/11**

(45) Bekanntmachung des Hinweises auf die Patenterteilung:
**09.11.94 Patentblatt 94/45**

(84) Benannte Vertragsstaaten:
**CH DE FR GB LI**

(56) Entgegenhaltungen:
**DE-A- 2 708 779**

(73) Patentinhaber: **BAYER AG**
**D-51368 Leverkusen (DE)**

(72) Erfinder: **Jäger, Horst, Dr.**
**Carl-Rumpff-Strasse 37**
**W-5090 Leverkusen 1 (DE)**

EP 0 474 039 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung betrifft neue o-Aminoazoverbindungen der Formel

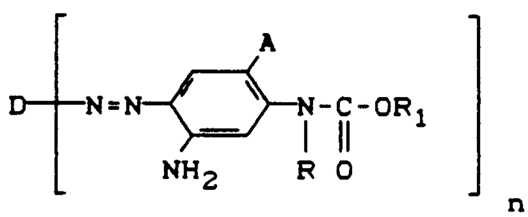

(I)

worin

- D für den Rest einer Diazokomponente steht,
- A für Wasserstoff, Alkyl, Alkoxy, Halogen, Carboxy oder Sulfo steht,
- R für Wasserstoff oder Alkyl steht,
- $R_1$ für Alkyl, Aralkyl, Aryl oder Cycloalkyl steht, und
- n für 1 oder 2 steht,

wobei die oben genannten Alkyl-, Alkoxy-, Aryl-, Aralkyl- und Cycloalkylreste gegebenenfalls substituiert sind,

sowie Verfahren zu ihrer Herstellung.

In Formel (I) steht

- D vorzugsweise für einen gegebenenfalls substituierten Rest der Benzol-, Naphthalin-, Diphenyl-, Stilben- oder heterocyclischen Reihe,
- A vorzugsweise für Wasserstoff, gegebenenfalls substituiertes $C_1$-$C_4$-Alkyl, gegebenenfalls substituiertes $C_1$-$C_4$-Alkoxy, Fluor, Chlor, Brom, -COOH oder -$SO_3H$,
- R vorzugsweise für Wasserstoff oder gegebenenfalls substituiertes $C_1$-$C_4$-Alkyl,
- $R_1$ vorzugsweise für gegebenenenfalls substituiertes $C_1$-$C_4$-Alkyl, gegebenenfalls im Phenylteil substituiertes Phenyl($C_1$-$C_2$)alkyl, gegebenenfalls substituiertes Phenyl oder gegebenenfalls substituiertes $C_5$-$C_6$-Cycloalkyl, und
- n vorzugsweise für 1 oder 2.

Beispiele für geeignete Substituenten des Restes D sind: $C_1$-$C_4$-Alkyl, $C_1$-$C_4$-Alkoxy, wobei diese Alkyl- oder Alkoxyreste beispielsweise durch OH, -$OCH_3$, -COOH, -$OSO_3H$, -$SO_3H$ substituiert sein können; -$SO_3H$, -COOH, Halogenatome wie F, Cl oder Br; $NH_2$, OH, $NO_2$, Phenylamino, wobei der Phenylrest beispielsweise durch $CH_3$, -$OCH_3$, -$SO_3H$ substituiert sein kann; Phenyl- und Naphthylazo, wobei diese Reste insbesondere durch -$SO_3H$ substituiert sein können.

Ein bevorzugter Substituent des Restes D ist die Sulfogruppe.

Beispiele für gegebenenfalls substituiertes $C_1$-$C_4$-Alkyl in der Definition von A, R und $R_1$ sind Methyl, Ethyl, n-Propyl, iso-Propyl, n-Butyl, s-Butyl, i-Butyl oder t-Butyl, wobei als Substituenten jeweils beispielsweise in Frage kommen: OH, -$OCH_3$, -COOH, -$OSO_3H$ oder -$SO_3H$.

Beispiele für gegebenenfalls substituiertes $C_1$-$C_4$-Alkoxy in der Definition von A sind Methoxy, Ethoxy, n-Propoxy, iso-Propoxy, n-Butoxy, s-Butoxy, i-Butoxy oder t-Butoxy, wobei als Substituenten jeweils beispielsweise die oben für Alkyl genannten Substituenten in Frage kommen.

Beispiele für Reste R sind $CH_3$, -$C_2H_5$, -$C_2H_5OH$, -$CH_2$-$CH_2COOH$, -$CH_2CH_2SO_3H$.

Beispiele für Reste $R_1$ sind Methyl, Ethyl, n-Propyl, iso-Propyl, n-Butyl, iso-Butyl, t-Butyl, Phenyl, Benzyl, Phenethyl, Cyclopentyl und Cyclohexyl, wobei als Alkyl- und Cycloalkylsubstituenten jeweils OH, -COOH und -$SO_3H$ in Frage kommen, und als Phenyl-, Benzyl- und Phenylethylsubstituenten jeweils OH, Cl, Br oder Methyl in Frage kommen.

Bevorzugte Verbindungen im Rahmen der Formel (I) sind solche der Formeln

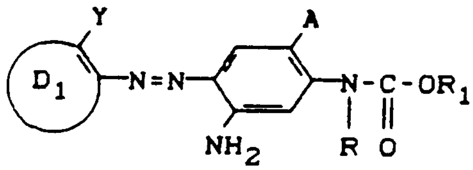

(II)

worin

A, R und $R_1$ die oben angegebene allgemeine und vorzugsweise Bedeutung haben,

$D_1$ für den Rest einer Diazokomponente der Benzol-, Naphthalin-, Diphenyl-, Stilben- oder heterocyclischen Reihe steht, welcher zusätzlich die beispielhaft für D genannten Substituenten enthalten kann, und

Y für $-OCH_3$ oder $-OC_2H_5$ steht;

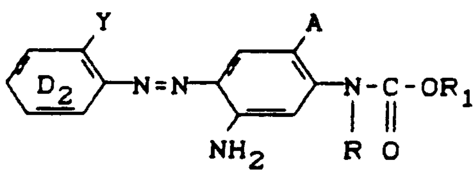

(III)

worin

A, R und $R_1$ die oben angegebene allgemeine und vorzugsweise Bedeutung haben,

der Benzolkern $D_2$ zusätzlich die beispielhaft für D genannten Substituenten enthalten kann, und

Y für $-OCH_3$ oder $-OC_2H_5$ steht;

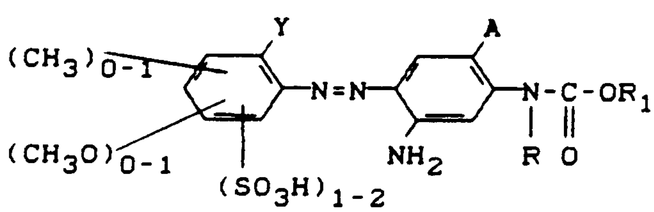

(IV)

worin

A die oben angegebene allgemeine und bevorzugte Bedeutung hat, insbesondere für Wasserstoff, Cl, -COOH, $-SO_3H$, $-CH_3$ oder $-OCH_3$ steht,

R die oben angegebene allgemeine und bevorzugte Bedeutung hat, insbesondere für Wasserstoff, $-CH_3$, $-C_2H_5$, $-C_2H_5OH$, $-CH_2CH_2COOH$ oder $-CH_2CH_2SO_3H$ steht,

$R_1$ die oben angegebene allgemeine und bevorzugte Bedeutung hat, insbesondere für $-CH_3$, $-C_2H_5$, $n-C_3H_7$, $i-C_3H_7$, Benzyl, Phenyl oder Cyclohexyl steht, und

Y für $-OCH_3$ oder $-OC_2H_5$ steht.

Besonders bevorzugte Verbindungen der Formeln (I), (II), (III) und (IV) sind solche, in welchen

R für Wasserstoff

$R_1$ für $CH_3$ oder $-C_2H_5$ steht, und

A für Wasserstoff, Cl, -COOH, $-SO_3H$, $CH_3$ oder $-OCH_3$ steht.

Ganz besonders bevorzugt sind Verbindungen der Formeln (I), (II), (III) und (IV), in welchen

R für Wasserstoff,

$R_1$ für $CH_3$ oder $-C_2H_5$ und

A für Wasserstoff steht.

Die neuen o-Aminoazoverbindungen der Formel (I) können hergestellt werden, indem man Aminoazofarbstoffe der Formel

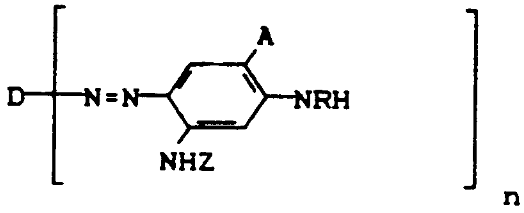

(V)

worin

Z für Acyl, vorzugsweise für $C_1$-$C_6$-Alkylcarbonyl, $C_1$-$C_6$-Alkenylcarbonyl, Carboxycarbonyl, Phenylcarbonyl oder Phenyl-$C_1$-$C_4$-alkylcarbonyl steht, und

D, A, R und n die oben angegebene Bedeutung haben,

mit Chlorameisensäurestern der Formel

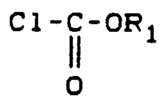

(VI)

worin

$R_1$ die oben angegebene Bedeutung hat,

zu einer Verbindung der Formel

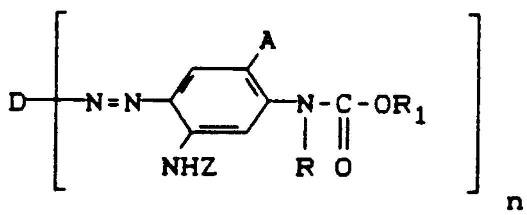

(VII)

in welcher

D, A, R, $R_1$, n und Z die oben angegebene Bedeutung haben,

acyliert und diese dann durch Erhitzen im sauren Medium zu einer Verbindung der Formel (I) verseift.

Die Aminoazoverbindungen (V) erhält man in bekannter Weise durch Kupplung von diazotierten oder tetrazotierten Aminen der Formel

$D(NH_2)_n$ (VIII)

in welcher

D und n die oben angegebene Bedeutung haben,

auf Amine der Formel

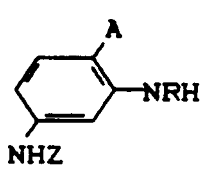

(IX)

in welcher

A, R und Z die oben angegebene Bedeutung haben,

im schwach sauren Medium (pH-Bereich 2-5, vorzugsweise 3-4).

Die Acylierung der Aminoazoverbindungen (V) mit den Chlorameisensäureestern (VI) wird vorzugsweise in Wasser bei 0-30 °C, insbesondere 10-20 °C, und bei pH 3-8, insbesondere 5-7, ausgeführt, wobei die bei der Acylierung freiwerdende Salzsäure durch Zusatz von Alkali- oder Erdalkalihydroxyden, -carbonaten, -hydrogencarbonaten oder -phosphaten neutralisiert wird.

Die Verseifung der Verbindungen (VII) zu den Aminoazoverbindungen (I) geschieht vorzugsweise in Wasser durch Erhitzen auf 60-110 °C, insbesondere 80-90 °C, in Gegenwart von Säure. Der Gehalt an Säure liegt bei 0,5-3 Mol, vorzugsweise bei 1-2 Mol Säure pro Liter Verseifungslösung. Als Säure verwendet man insbesondere Salz- oder Schwefelsäure.

Geeignete Beispiele für die Amine (VIII) worin n für 1 oder 2 steht, die Amine (IX) und die Chlorameisensäureester (VI) sind:

Amine der Formel (VIII) mit n = 1:

1-Amino-2-methoxy-5-sulfo-benzol,
1-Amino-2-methoxy-4-sulfo-benzol,
1-Amino-2-methoxy-5-methyl-4-sulfo-benzol,
1-Amino-2-methoxy-3,5-disulfo-benzol,
1-Amino-2-chlor-4-sulfo-benzol,
1-Amino-2-chlor-5-sulfo-benzol,
1-Amino-2-methoxy-benzol,
1-Amino-2,5-dimethoxy-benzol,
1-Amino-2-ethoxy-benzol,
1-Amino-2-sulfo-benzol,
1-Amino-4-sulfo-benzol,
1-Amino-2-nitro-benzol,
1-Amino-2-nitro-4-sulfo-benzol,
2-Amino-4,8-disulfo-naphthalin,
2-Amino-6,8-disulfo-naphthalin,
2-Amino-6-sulfo-naphthalin,
2-Amino-8-sulfo-naphthalin,
2-Amino-4,6,8-trisulfo-naphthalin,
1-Amino-4-sulfo-naphthalin,
1-Amino-4,6-disulfo-naphthalin,
1-Amino-2-hydroxy-4-sulfo-naphthalin,
1-Amino-2-hydroxy-6-nitro-4-sulfo-naphthalin,
2-Amino-3-methoxy-6-sulfo-naphthalin,
2-Amino-3-methoxy-6,8-disulfo-naphthalin,
2-Amino-3-hydroxy-6-sulfo-naphthalin,
2-Amino-3-hydroxy-6,8-disulfo-naphthalin,
4-Amino-2-sulfo-stilben,
4-Amino-2,2'-disulfo-stilben,
4-Amino-2,4'-disulfo-stilben,
4-Amino-4'-nitro-2,2'-disulfo-stilben,
1-Amino-2-ethoxy-6-sulfo-naphthalin,
1-Amino-2-carboxymethoxy-6-sulfo-naphthalin,
1-Amino-2-hydroxy-4-nitro-6-sulfo-benzol,
1-Amino-2-hydroxy-6-nitro-4-sulfo-benzol,
1-Amino-2-methoxy-3-nitro-5-sulfo-benzol,
1-Amino-2-methoxy-5-nitro-4-sulfo-benzol,
1-Amino-2-hydroxy-5-nitro-4-sulfo-benzol,
1-Sulfo-benzol-[4 azo 1]-2-methyl-4-amino-5-methoxy-benzol,
2,5-Disulfo-benzol-[4 azo 1]-2-methyl-4-amino-5-methoxy-benzol,
1-Sulfo-benzol-[4 azo 1]-3-methoxy-4-amino-benzol,
2,5-Disulfo-benzol-[4 azo 1]-2,5-dimethoxy-4-amino-benzol,
1-Sulfo-benzol-[4 azo 1]-2,5-dimethoxy-4-amino-benzol,
4,8-Disulfonaphthalin-[2 azo 1]-2-methyl-4-amino-5-methoxy-benzol.

Amine der Formel (VIII) mit n = 2:

4,4'-Diamino-2,2'-disulfo-stilben,
4,4'-Diamino-3,3'-disulfo-diphenyl,
4,4'-Diamino-2,2'-disulfo-diphenyl,
4,4'-Diamino-3,2'-disulfo-diphenylamin,
4,4'-Diamino-3,3'-dimethoxy-diphenyl,
4,4'-Diamino-3,3'-dimethoxy-5,5'-disulfo-diphenyl-harnstoff.

Amine der Formel (IX):

1-Amino-3-formylamino-benzol,
1-Amino-3-acetylamino-benzol,
1-Amino-3-oxalylamino-benzol,
1-Amino-3-oxyacetylamino-benzol,
1-Amino-3-propionylamino-benzol,
1-Amino-3-acetylamino-6-methyl-benzol,
1-Amino-3-acetylamino-6-methoxy-benzol,
1-Amino-3-acetylamino-6-carboxy-benzol,
1-Amino-3-acetylamino-6-sulfo-benzol,
1-Amino-3-acetylamino-6-chlor-benzol,
1-N-Methylamino-3-acetylamino-benzol,

Chlorameisensäureester der Formel (VI):

Chlorameisensäuremethylester,
Chlorameisensäureethylester,
Chlorameisensäure-iso-propylester,
Chlorameisensäure-n-propylester,
Chlorameisensäure-n-benzylester.

Die neuen o-Aminoazoverbindungen (I) sind wertvolle Zwischenprodukte für die Synthese von Metallkomplex- Farbstoffen. Die neuen o-Aminoazoverbindungen (I) eignen sich sehr gut zum Färben von Wolle und Polyamid.

Die Formeln der wasserlöslichen Verbindungen in der Beschreibung und in den Beispielen sind die der freien Säuren. Isoliert und angewandt werden die Stoffe im allgemeinen in Form ihrer Alkalisalze, insbesondere der Lithium-, Natrium- oder Kaliumsalze.

Beispiel 1

20,3 g 1-Amino-2-methoxy-5-sulfo-benzol (Diazokomponente) werden in 100 ml Wasser neutral gelöst. Durch Einbringen von Eis kühlt man auf 0-5°C ab, setzt dann unter Rühren 30 ml 30 %ige Salzsäure zu und tropft 70 ml 10 %ige Natriumnitritlösung ein. Nach beendeter Diazotierung wird der Überschuß an Nitrit mit Amidosulfonsäure zerstört. 16,6 g 3-Amino-acetanilid (Kupplungskomponente) werden in Form einer wäßrigen Lösung zugegeben. Anschließend wird der pH-Wert mit 15 %iger Sodalösung auf 3-4 eingestellt. Nach mehrstündigem Rühren ist die Kupplung beendet. Der ausgefallene Feststoff wird abgesaugt. Er entspricht er Formel

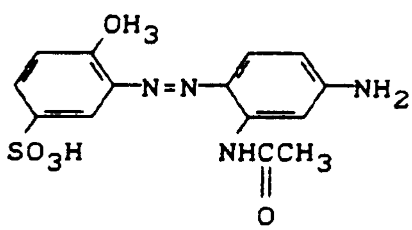

Die wasserfeuchte Paste wird in ca. 200 ml Wasser neutral gelöst. Man kühlt durch Einbringen von Eis auf 10 °C ab und tropft dann 13 g Chlorameisensäureethylester ein, wobei durch gleichzeitiges Zutropfen von 15 %iger Sodalösung der pH-Wert zwischen 6 und 7 gehalten wird.

Nach beendeter Acylierung, wobei der Farbstoff der Formel

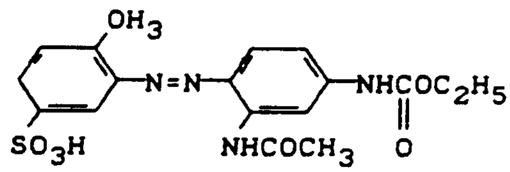

entsteht, erwärmt man auf 90 °C und setzt soviel konzentrierte Salzsäure zu, daß eine 1N-salzsaure Lösung vorliegt. Nach ca. zweistündigem Rühren ist die Acetylgruppe abgespalten, wobei sich das schwer lösliche Betain des Farbstoffs der Formel

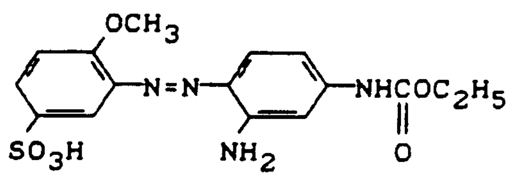

$\lambda_{max}$ = 426

abscheidet. Der Farbstoff wird abgesaugt und mit Wasser ausgewaschen. Die resultierende dunkelbraune Paste löst sich leicht in Wasser, nach Zugabe von Alkalien mit gelber Farbe.

Weitere o-Aminoazofarbstoffe mit den in der letzten Spalte genannten $\lambda_{max}$-Werten erhält man nach den Angaben von Beispiel 1, wenn man als Diazokomponente die in Spalte 1 aufgeführten Amine, als Kupplungskomponente die in Spalte 2 erwähnten Amine und die in Spalte 3 genannten Chlorameisensäureester verwendet.

| Beispiel | Diazokomponente | Kupplungskomponente | Chlorameisen-säureester | $\lambda_{max}$ |
|---|---|---|---|---|
| | | | 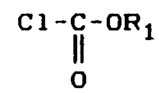 $R_1$ | |
| 2 | 1-Amino-2-methoxy-5-sulfo-benzol | 1-Amino-3-acetyl-amino-benzol | Methyl | 426 |
| 3 | 1-Amino-2-methoxy-5-sulfo-benzol | 1-Amino-3-formyl-amino-benzol | Ethyl | 426 |
| 4 | 1-Amino-2-methoxy-5-sulfo-benzol | 1-Amino-3-oxalyl-amino-benzol | Ethyl | 426 |
| 5 | 1-Amino-2-methoxy-4-sulfo-5-methyl-benzol | 1-Amino-3-acetyl-amino-benzol | Methyl | 444 |
| 6 | 1-Amino-2-methoxy-4-sulfo-5-methyl-benzol | 1-Amino-3-acetyl-amino-benzol | Ethyl | 444 |
| 7 | 2-Amino-4,8-disulfo-naphthalin | 1-Amino-3-acetyl-amino-benzol | Ethyl | 454 |
| 8 | 1-Amino-2-methoxy-benzol | 1-Amino-2-sulfo-5-acetylamino-benzol | Ethyl | |
| 9 | 2,5-Disulfo-benzol-(1 azo 4)-1-amino-2-methoxy-5-methyl-benzol | 1-Amino-3-acetyl-amino-benzol | Ethyl | 486 |

## Patentansprüche

**1.** Verbindungen der Formel

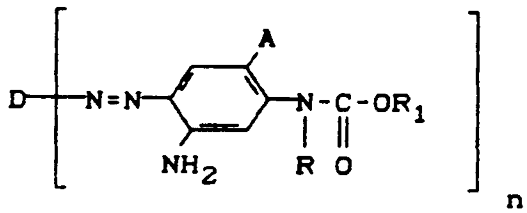

(I)

worin

- D für den Rest einer Diazokomponente steht,
- A für Wasserstoff, Alkyl, Alkoxy, Halogen, Carboxy oder Sulfo steht,
- R für Wasserstoff oder Alkyl steht,
- $R_1$ für Alkyl, Aralkyl, Aryl oder Cycloalkyl steht, und
- n für 1 oder 2 steht,

wobei die oben genannten Alkyl-, Alkoxy-, Aryl-, Aralkyl- und Cycloalkylreste gegebenenfalls substituiert sind.

**2.** Verbindungen des Anspruchs 1, worin

- D für einen gegebenenfalls substituierten Rest der Benzol-, Naphthalin-, Diphenyl-, Stilben-, oder heterocyclischen Reihe steht, wobei als Substituenten in Frage kommen: $C_1$-$C_4$-Alkyl, $C_1$-$C_4$-Alkoxy, wobei diese Alkyl- oder Alkoxyreste durch OH, $-OCH_3$, -COOH, $-OSO_3H$, $-SO_3H$ substituiert sein können; $-SO_3H$, -COOH, Halogenatome wie F, Cl oder Br; $NH_2$, OH, $NO_2$, Phenylamino, wobei der Phenylrest durch $CH_3$, $-OCH_3$, $-SO_3H$ substituiert sein kann; Phenyl- und Naphthylazo, wobei diese Reste durch $-SO_3H$ substituiert sein können,
- A für Wasserstoff, $C_1$-$C_4$-Alkyl, $C_1$-$C_4$-Alkoxy, Fluor, Chlor, Brom, -COOH oder $-SO_3H$ steht, wobei die Alkyl- und Alkoxyreste jeweils durch OH, $-OCH_3$, -COOH, $-OSO_3H$, $-SO_3H$ substituiert sein können,
- R für Wasserstoff oder $C_1$-$C_4$-Alkyl steht, wobei die Alkylreste durch OH, -COOH oder $-SO_3H$ substituiert sein können,
- $R_1$ für $C_1$-$C_4$-Alkyl, Phenyl($C_1$-$C_2$)alkyl, Phenyl oder $C_5$-$C_6$-Cycloalkyl steht, wobei die Alkyl- und Cycloalkylreste durch OH, -COOH oder $-SO_3H$ substituiert sein können und die Phenylalkyl- sowie Phenylreste jeweils im Phenylteil durch Methyl, OH, Cl oder Br substituiert sein können, und
- n für 1 oder 2 steht,

**3.** Verbindungen der Ansprüche 1 und 2 der Formel

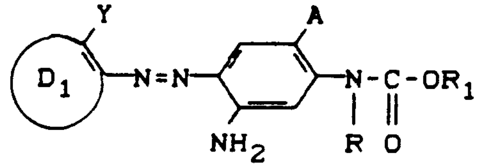

(II)

in welcher

A, R und $R_1$ die in den Ansprüchen 1 und 2 angegebene Bedeutung haben,

- Y für $-OCH_3$ oder $-OC_2H_5$ steht, und
- $D_1$ für den Rest einer Diazokomponente der Benzol-, Naphthalin-, Diphenyl-, Stilben- oder heterocyclischen Reihe steht, welche zusätzlich folgende Substituenten enthalten kann: $C_1$-$C_4$-Alkyl, $C_1$-$C_4$-Alkoxy, wobei diese Alkyl- oder Alkoxyreste beispielsweise durch OH, $-OCH_3$,

-COOH, $-OSO_3H$, $-SO_3H$ substituiert sein können: $-SO_3H$, -COOH, Halogenatome wie F, Cl oder Br; $NH_2$, OH, $NO_2$, Phenylamino, wobei der Phenylrest beispielsweise durch $CH_3$, $-OCH_3$, $-SO_3H$ substituiert sein kann; Phenyl- und Naphthylazo, wobei diese Reste insbesondere durch $-SO_3H$ substituiert sein können.

**4.** Verbindungen der Ansprüche 1 und 2 der Formel

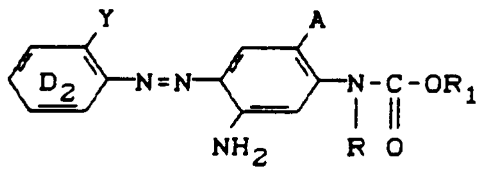

(III)

in welcher
A, R und $R_1$ die in den Ansprüchen 1 und 2 angegebenen Bedeutungen haben,
Y für $-OCH_3$ oder $-OC_2H_5$ steht, und
der Benzolkern $D_2$ zusätzlich folgende Substituenten enthalten kann:
$C_1$-$C_4$-Alkyl, $C_1$-$C_4$-Alkoxy, wobei diese Alkyl- oder Alkoxyreste beispielsweise durch OH, $-OCH_3$, -COOH, $-OSO_3H$, $-SO_3H$ substituiert sein können; $-SO_3H$, -COOH, Halogenatome wie F, Cl oder Br; $NH_2$, OH, $NO_2$, Phenylamino, wobei der Phenylrest beispielsweise durch $CH_3$, $-OCH_3$, $-SO_3H$ substituiert sein kann; Phenyl- und Naphthylazo, wobei diese Reste insbesondere durch $-SO_3H$ substituiert sein können.

**5.** Verbindungen des Anspruchs 1 der Formel

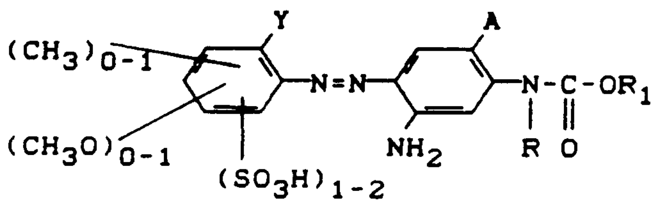

(IV)

in welcher
A für Wasserstoff, Cl, -COOH, $-SO_3H$, $-CH_3$ oder $-OCH_3$ steht,
R für Wasserstoff, $-CH_3$, $-C_2H_5$, $-C_2H_5OH$, $-CH_2CH_2COOH$ oder $-CH_2CH_2SO_3H$ steht, und
$R_1$ für $CH_3$, $-C_2H_5$, n-$C_3H_7$, iso-$C_3H_7$, Benzyl, Phenyl oder Cyclohexyl steht,

**6.** Verbindungen der Ansprüche 1-5, worin
R für Wasserstoff steht,
$R_1$ für $CH_3$ oder $-C_2H_5$ steht, und
A für Wasserstoff steht.

**7.** Verbindungen nach Anspruch 1 der Formel

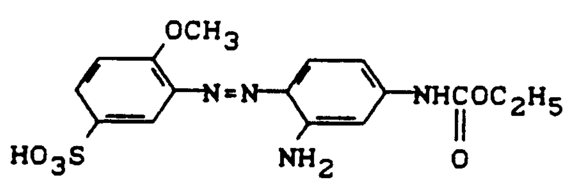

**8.** Verfahren zur Herstellung der Verbindungen der Formel (I), dadurch gekennzeichnet, daß Aminoazoverbindungen der Formel

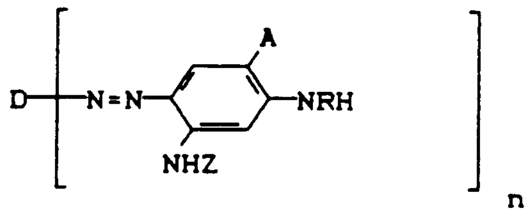

(V)

in welcher

Z für Acyl steht, und

D, A, R und n die in Anspruch 1 angegebene Bedeutung haben,

mit Chlorameisensäureestern der Formel

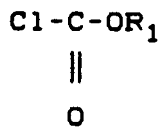

(VI)

worin

$R_1$ die in Anspruch 1 angegebene Bedeutung hat,

zu einer Verbindung der Formel

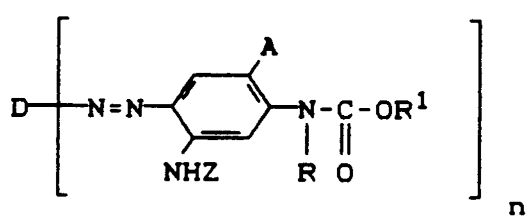

(VII)

in welcher

D, A, R, $R_1$ und n die in Anspruch 1 angegebene Bedeutung haben, und

Z die oben angegebene Bedeutung hat,

umsetzt und diesen dann durch Erhitzen im sauren Medium zu einem Farbstoff der Formel (I) verseift.

**9.** Verfahren nach Anspruch 8, worin

Z für $C_1$-$C_6$-Alkylcarbonyl, $C_1$-$C_6$-Alkenylcarbonyl, Carboxycarbonyl, Phenylcarbonyl oder Phenyl($C_1$-$C_4$)alkylcarbonyl steht.

## Claims

1. Compounds of the formula

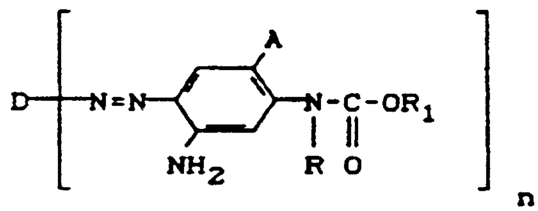

(I)

in which

D represents the radical of a diazo component,

A represents hydrogen, alkyl, alkoxy, halogen, carboxyl or sulpho,

R represents hydrogen or alkyl,

$R_1$ represents alkyl, aralkyl, aryl or cycloalkyl, and

n represents 1 or 2,

it being possible for the abovementioned alkyl, alkoxy, aryl, aralkyl and cycloalkyl radicals to be substituted or unsubstituted.

2. Compounds of Claim 1 in which

D represents a substituted or unsubstituted radical from the benzene, naphthalene, biphenyl, stilbene or heterocyclic series, suitable substituents being as follows: $C_1$-$C_4$-alkyl, $C_1$-$C_4$-alkoxy, it being possible for these alkyl or alkoxy radicals to be substituted by OH, $-OCH_3$, -COOH, $-OSO_3H$, $-SO_3H$; $-SO_3H$, -COOH, halogen atoms, such as F, Cl or Br; $NH_2$, OH, $NO_2$, phenylamino, it being possible for the phenyl radical to be substituted by $CH_3$, $-OCH_3$, $-SO_3H$; phenylazo and naphthylazo, it being possible for these radicals to be substituted by $-SO_3H$,

A represents hydrogen, $C_1$-$C_4$-alkyl, $C_1$-$C_4$-alkoxy, fluorine, chlorine, bromine, -COOH or $-SO_3H$, it being possible for the alkyl and alkoxy radicals each to be substituted by OH, $-OCH_3$, -COOH, $-OSO_3H$, $-SO_3H$,

R represents hydrogen or $C_1$-$C_4$-alkyl, it being possible for the alkyl radicals to be substituted by OH, -COOH or $-SO_3H$,

$R_1$ represents $C_1$-$C_4$-alkyl, phenyl($C_1$-$C_2$)alkyl, phenyl or $C_5$-$C_6$-cycloalkyl, it being possible for the alkyl and cycloalkyl radicals to be substituted by OH, -COOH or $-SO_3H$ and the phenylalkyl and phenyl radicals to be substituted in each case in the phenyl portion by methyl, OH, Cl or Br, and

n represents 1 or 2.

3. Compounds of Claims 1 and 2 of the formula

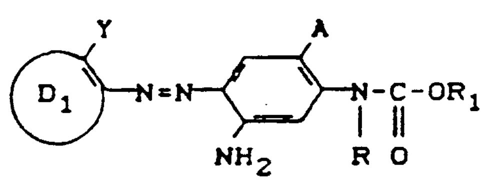

(II)

in which

A, R and $R_1$ have the meaning given in Claims 1 and 2,

Y represents $-OCH_3$ or $-OC_2H_5$, and

$D_1$ represents the radical of a diazo component from the benzene, naphthalene, biphenyl, stilbene or heterocyclic series, which additionally can contain the following substituents: $C_1$-$C_4$-alkyl, $C_1$-$C_4$-alkoxy, it being possible for these alkyl or alkoxy radicals to be substituted, for example, by OH, $-OCH_3$, -COOH, $-OSO_3H$, $-SO_3H$; $-SO_3H$, -COOH, halogen atoms,

such as F, Cl or Br; $NH_2$, OH, $NO_2$, phenylamino, it being possible for the phenyl radical to be substituted, for example, by $CH_3$, $-OCH_3$, $-SO_3H$; phenylazo and naphthylazo, it being possible for these radicals to be substituted in particular by $-SO_3H$.

**4.** Compounds of Claims 1 and 2 of the formula

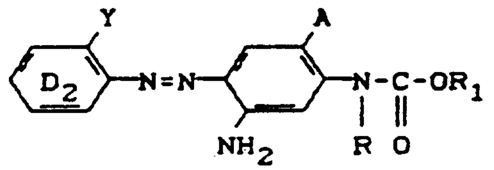

(III)

in which
A, R and $R_1$ have the meanings given in Claims 1 and 2,
Y represents $-OCH_3$ or $-OC_2H_5$, and
the benzene ring $D_2$ can additionally contain the following substituents:
$C_1$-$C_4$-alkyl, $C_1$-$C_4$-alkoxy, it being possible for these alkyl or alkoxy radicals to be substituted, for example, by OH, $-OCH_3$, -COOH, $-OSO_3H$, $-SO_3H$; $-SO_3H$, -COOH, halogen atoms, such as F, Cl or Br; $NH_2$, OH, $NO_2$, phenylamino, it being possible for the phenyl radical to be substituted, for example, by $CH_3$, $-OCH_3$, $-SO_3H$; phenylazo and naphthylazo, it being possible for these radicals to be substituted in particular by $-SO_3H$.

**5.** Compounds of Claim 1 of the formula

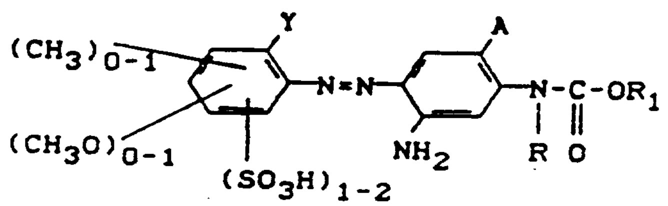

(IV)

in which
- A represents hydrogen, Cl, -COOH, $-SO_3H$, $-CH_3$ or $-OCH_3$,
- R represents hydrogen, $-CH_3$, $-C_2H_5$, $-C_2H_5OH$, $-CH_2CH_2COOH$ or $-CH_2CH_2SO_3H$, and
- $R_1$ represents $CH_3$, $-C_2H_5$, n-$C_3H_7$, iso-$C_3H_7$, benzyl, phenyl or cyclohexyl.

**6.** Compounds of Claims 1-5 in which
- R represents hydrogen,
- $R_1$ represents $CH_3$ or $-C_2H_5$, and
- A represents hydrogen.

**7.** Compounds according to Claim 1 of the formula

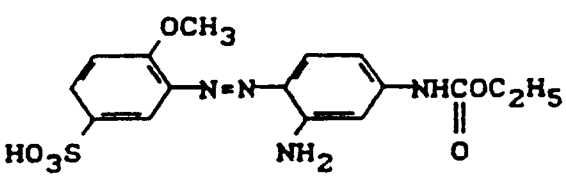

8. Process for the preparation of the compounds of the formula (I), characterized in that aminoazo compounds of the formula

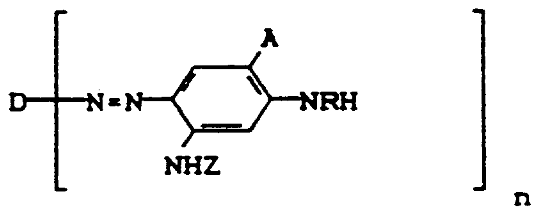

(V)

in which

Z represents acyl, and

D, A, R and n have the meaning given in Claim 1, are reacted with chloroformates of the formula

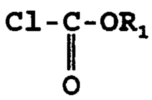

(VI)

in which

$R_1$ has the meaning given in Claim 1,

to give a compound of the formula

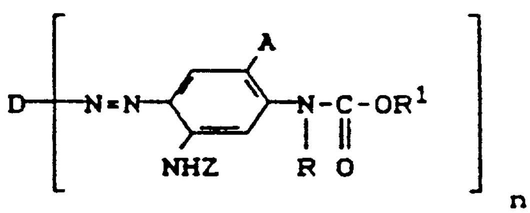

(VII)

in which

D, A, R, $R_1$ and n have the meaning given in Claim 1, and

Z has the abovementioned meaning,

and this compound is then hydrolysed by heating in acid medium to give a dyestuff of the formula (I).

9. Process according to Claim 8, in which

Z represents $C_1$-$C_6$-alkylcarbonyl, $C_1$-$C_6$-alkenylcarbonyl, carboxycarbonyl, phenylcarbonyl or phenyl($C_1$-$C_4$)alkylcarbonyl.

## Revendications

1. Composés de formule (I):

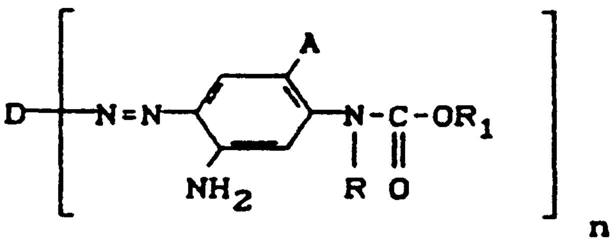

(I)

dans laquelle
D représente le reste d'un composant diazotable,
A représente un atome d'hydrogène, un reste alkyle, alcoxy, halogéno, carboxy ou sulfo,
R représente un atome d'hydrogène ou un reste alkyle,
$R_1$ représente un reste alkyle, aralkyle, aryle ou cycloalkyle, et
n vaut 1 ou 2,
les restes alkyle, alcoxy, aryle, aralkyle et cycloalkyle précités pouvant éventuellement être encore substitués.

2. Composés selon la revendication 1, dans lesquels
D représente un reste, éventuellement substitué, de la série du bezène, du naphtalène, du diphényle, du stilbène ou de la série hétérocyclique, et l'on peut citer comme substituants :
des restes alkyle en $C_1$ à $C_4$, alcoxy en $C_1$ à $C_4$, ces restes alkyles ou alcoxy pouvant être substitués par OH, $-OCH_3$, -COOH, $-OSO_3H$, $-SO_3H$ ; un reste $-SO_3H$, -COOH, des atomes d'halogène comme F, Cl ou Br ; $NH_2$, OH, $NO_2$, un reste phénylamino, le reste phényle pouvant être substitué par $CH_3$, $-OCH_3$, $-SO_3H$ ; un reste phénylazo et naphtylazo, ces restes pouvant être substitués par un groupe $-SO_3H$ ;
A représente un atome d'hydrogène, un reste alkyle en $C_1$ à $C_4$, alcoxy en $C_1$ à $C_4$, un atome de fluor, de chlore, de brome, un reste -COOH ou $-SO_3H$, les restes alkyle et alcoxy pouvant chacun être substitués par OH, $-OCH_3$, -COOH, $-OSO_3H$, $-SO_3H$ ;
R représente un atome d'hydrogène ou un reste alkyle en $C_1$ à $C_4$, les restes alkyles pouvant être substitués par OH, -COOH ou $-SO_3H$,
$R_1$ représente un reste alkyle en $C_1$ à $C_4$, phényl(alkyle (en $C_1$ ou $C_2$)), phényle ou cycloalkyle en $C_5$-$C_6$, des restes alkyle et cycloalkyle pouvant être substitués par OH, -COOH ou $-SO_3H$, et les restes phénylalkyle et phényle pouvant être substitués chaque fois sur la partie phényle par un reste méthyle, OH, Cl ou Br, et n vaut 1 ou 2.

3. Composés selon les revendications 1 et 2, de formule :

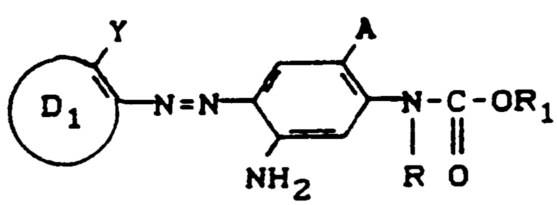

(II)

dans laquelle
A, R et $R_1$ ont le sens indiqué aux revendications 1 et 2,
Y représente $-OCH_3$ ou $-OC_2H_5$, et
$D_1$ représente le reste d'un composant diazotable de la série du benzène, du naphtalène, du diphényle, du stilbène ou de la série hétérocyclique, qui peuvent contenir en outre les substituants suivants :
un reste alkyle en $C_1$ à $C_4$, alcoxy en $C_1$ à $C_4$, ces restes alkyles ou alcoxy pouvant être substitués par

exemple par OH, $-OCH_3$, -COOH, $-OSO_3H$, $-SO_3H$ ; $-SO_3H$, -COOH, des atomes d'halogène comme F, Cl ou Br ; $NH_2$, OH, $NO_2$, phénylamino, le reste phényle pouvant éventuellement être substitué par exemple par $CH_3$, $-OCH_3$, $-SO_3H$ ; un reste phénylazo et naphtylazo, ces restes pouvant éventuellement être substitués en particulier par $-SO_3H$.

**4.** Composés selon les revendications 1 et 2, de formule :

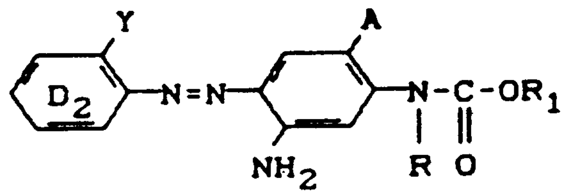

(III)

dans laquelle
A, R et $R_1$ ont les sens indiqués aux revendications 1 et 2,
Y représente $-OCH_3$ ou $-OC_2H_5$,
et
les noyaux benzéniques $D_2$ peuvent contenir en outre les substituants suivants :
un reste alkyle en $C_1$ à $C_4$, alcoxy en $C_1$ à $C_4$, ces restes alkyles ou alcoxy pouvant être substitués par exemple par OH, $-OCH_3$, -COOH, $-OSO_3H$, $-SO_3H$ ; $-SO_3H$, -COOH, des atomes d'halogène comme F, Cl ou Br ; $NH_2$, OH, $NO_2$ un reste phénylamino, le reste phényle pouvant être substitué par exemple par $CH_3$, $-OCH_3$, $-SO_3H$ ; des restes phénylazo et naphtylazo, ces restes pouvant être substitués notamment par $-SO_3H$.

**5.** Composés selon la revendication 1, de formule :

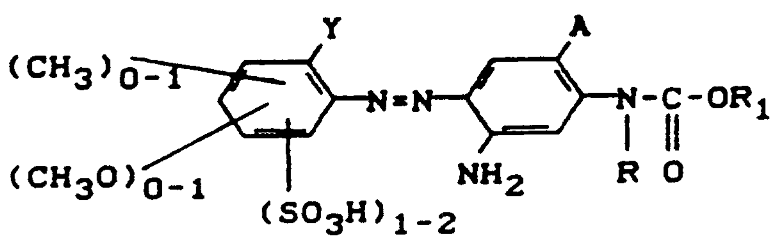

(IV)

dans laquelle
A représente un atome d'hydrogène, de Cl, un reste -COOH, $-SO_3H$, $-CH_3$ ou $-OCH_3$ ;
R représente un atome d'hydrogène, un reste $-CH_3$, $-C_2H_5$, $-C_2H_5OH$, $-CH_2CH_2COOH$ ou $-CH_2CH_2SO_3H$ ; et
$R_1$ représente un reste $-CH_3$, $-C_2H_5$, $n-C_3H_7$, $iso-C_3H_7$, benzyle, phényle ou cyclohexyle.

**6.** Composés selon les revendications 1 à 5, dans lesquels :
R représente un atome d'hydrogène,
$R_1$ représente $CH_3$ ou $-C_2H_5$, et
A représente un atome d'hydrogène.

**7.** Composés selon la revendication 1, de formule :

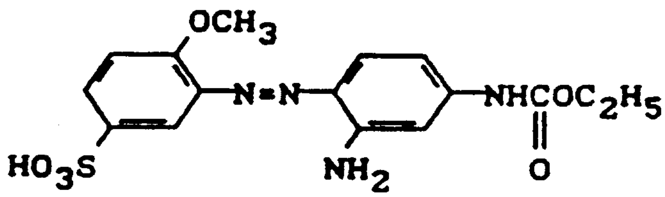

**8.** Procédé de préparation de composés de formule (I) caractérisé en ce qu'on fait réagir des composés aminoazoïques de formule :

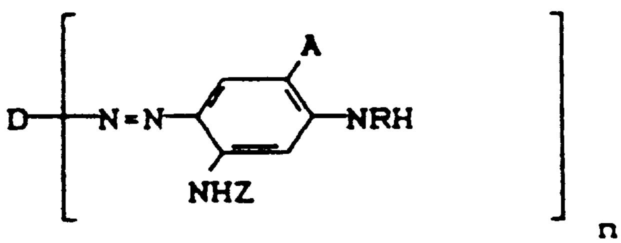

(V)

dans laquelle
Z représente un reste acyle, et
D, A, R et n ont le sens indiqué à la revendication 1,
avec des esters de l'acide chloroformique, de formule :

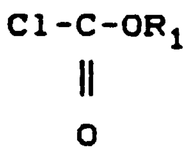

(VI)

dans laquelle
$R_1$ a le sens indiqué à la revendication 1,
pour obtenir un composé de formule :

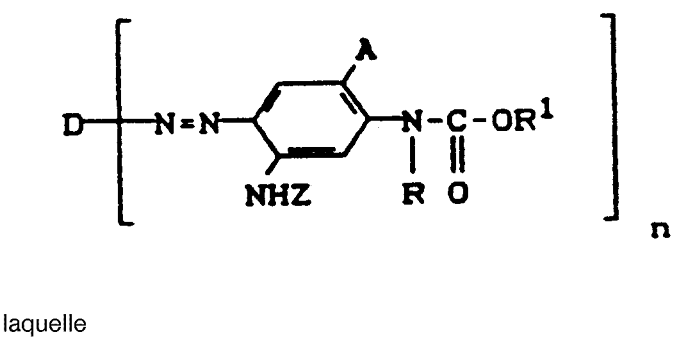

(VII)

dans laquelle
D, A, R, $R_1$ et n ont le sens indiqué à la revendication 1, et
Z a le sens indiqué ci-dessus,
et l'on saponifie ces composés, par chauffage en milieu acide, ce qui donne un colorant de formule (I).

**9.** Procédé selon la revendication 8, dans lequel :
Z représente un reste alkyl(en $C_1$ à $C_6$)carbonyle, alcényl(en $C_1$ à $C_6$)carbonyle, carboxycarbonyle, phénylcarbonyle ou phénylalkyl(en $C_1$ à $C_4$)carbonyle.